# EUROPEAN PATENT SPECIFICATION

(11) **EP 3 498 582 B1**
(45) Date of publication and mention of the grant of the patent: **07.07.2021**
(21) Application number: 18210959.5
(22) Date of filing: 07.12.2018
(51) Int. Cl.: B62K 23/04

(54) **THROTTLE GRIP DEVICE**
DROSSELKLAPPEN-DREHGRIFF
DISPOSITIF DE PRÉHENSION DE PAPILLON DES GAZ

(30) Priority: 14.12.2017 JP 2017239166
(43) Date of publication of application: 19.06.2019
(73) Proprietor: Asahi Denso Co., Ltd., Shizuoka 434-0046 (JP); Yamaha Hatsudoki Kabushiki Kaisha, Iwata-shi, Shizuoka 438-8501 (JP)
(72) Inventor: OSHIRO, Yukio, Hamamatsu City, Shizuoka, 434-0046 (JP); KUMAZAWA, Takeo, Hamamatsu City, Shizuoka, 434-0046 (JP); TANAKA, Tomoki, Iwata-shi, Shizuoka, 438-8501 (JP)
(74) Representative: Grünecker Patent- und Rechtsanwälte PartG mbB

(56) References cited:
- EP-A1- 2 263 933
- EP-A2- 1 477 398
- CN-A- 107 264 703
- JP-A- 2006 182 178
- US-A1- 2009 193 930

## Description

### TECHNICAL FIELD

The present invention relates to a throttle grip device configured such that an engine of a vehicle is controlled based on rotating operation of a throttle grip.

### BACKGROUND ART

A throttle grip device is widespread in a recent motorcycle. In the throttle grip device, a rotation angle of a throttle grip is detected by a throttle opening sensor such as a potentiometer, and the detected value is transmitted, as an electric signal, to an electronic control unit or the like that is mounted on the motorcycle. The electronic control unit performs a predetermined calculation based on the detected signal, and ignition timing of an engine and opening and closing of an intake valve or a throttle valve are controlled based on the calculation result.

In such a throttle grip device, since the rotation angle of the throttle grip is detected by the throttle opening sensor, an operation cable widely used for transmitting rotating operation of the throttle grip to the engine side is not required. Therefore, no sliding resistance is caused by sliding of an inner tube relative to an outer tube constituting the operation cable during the rotating operation of the throttle grip, so that a force to be transmitted to a driver side during the rotating operation of the throttle grip includes only a force to return to an initial position by a return spring, which causes discomfort for the driver.

In order to solve such a problem, as disclosed in JP-A-2003-252274, a prior art is proposed in which a friction plate is provided to apply a friction force in a direction opposite to a rotation direction of the throttle grip during the rotating operation of the throttle grip, and rotation load is obtained by the friction force generated by the friction plate. According to such a throttle grip device which is a prior art, a throttle wire can be eliminated, and the throttle grip can be operated without discomfort for the driver.

In other related prior art, CN 107264703 A discloses a speed-adjusting rotary handle assembly for a power riding vehicle. The speed-adjusting rotary handle assembly comprises a rotary handle, a sliding sleeve and elastic elements. The rotary handle is provided with a holding handle body and a guiding rod connected to the holding handle body. The guiding rod is sleeved with the sliding sleeve, and the sliding sleeve is arranged in the modes that the sliding sleeve can slide along the guiding rod, but cannot rotate along with the rotary handle. The elastic elements axially push and press the sliding sleeve towards the rotary handle. The holding handle body and the sliding sleeve form protrusions and grooves which are matched with each other, and the protrusions and the grooves define the oblique faces facing each other. Under the state that the rotary handle is not rotated, the protrusions are embedded into the grooves. In the initial stage of rotary handle rotation, the oblique faces of the protrusions and the grooves mutually oppositely slide, so that the sliding sleeve resists trust of the elastic elements to axially slide away from the rotary handle, and rotational resistance of the rotary handle is gradually increased with increasing of the rotation angle. In speed adjusting operation, the feedback touch sense of the rotational resistance can be provided. JP-2006-182178 A discloses a throttle grip device according to the preamble of independent claim 1.

In the above-mentioned prior art of JP-A-2003-252274, a relatively large spring load of a return spring or the like is generated immediately after the throttle grip starts being rotated (initial rotation), which causes discomfort for the driver during the operation. That is, immediately after the throttle grip starts being rotated, since a dead zone in which an output voltage of a throttle opening sensor or the like is not changed is often provided, the driver sufficiently feels the operation load while an engine output does not change, which causes discomfort for the driver.

### SUMMARY OF INVENTION

The present invention is made in view of the above circumstances. An object of the present invention is to provide a throttle grip device capable of improving operability by eliminating discomfort in initial rotation of a throttle grip.

According to a first aspect of the present invention, there is provided a throttle grip device comprising: a throttle grip that is rotatable by a driver; an interlocking member that can be rotated in conjunction with the throttle grip; rotation angle detecting means that can detect a rotation angle of the throttle grip by detecting a rotation angle of the interlocking member; and resistance means that can generate rotation load by generating a resistance force during rotation of the throttle grip, wherein the throttle grip device can control an engine of a vehicle in accordance with the rotation angle of the throttle grip detected by the rotation angle detecting means, characterized in that the resistance means is configured such that a resistance force generated in an initial range in which the throttle grip is rotated by a predetermined angle from an initial position can be different from a resistance force generated in a range in which the rotation angle of the throttle grip is larger than the predetermined angle.

Additionally, the resistance means is configured such that the resistance force generated in the initial range in which the throttle grip is rotated by the predetermined angle from the initial position can be smaller than the resistance force generated in the range in which the rotation angle of the throttle grip is larger than the predetermined angle.

Additionally, the resistance means includes: a sliding member that is assembled to be abutted against a sliding surface that is formed in a circumferential direction of the interlocking member; and biasing means that can press the sliding member against the sliding surface by applying a biasing force to the sliding member, and generate sliding resistance with rotation of the interlocking member, and a recess is formed in a part of the sliding surface corresponding to the initial range, and a compression dimension of the biasing means when the sliding member is located in the recess is set to be smaller than the compression dimension of the biasing means when the sliding member is located in other parts of the sliding surface.

Additionally, the resistance means includes pressing means that presses the interlocking member toward a direction in which the interlocking member is rotated from the initial position over the initial range.

Additionally, the pressing means includes a spring that can press a predetermined part of the interlocking member by a biasing force.

According to a second aspect of the present invention, in the throttle grip device according to the first aspect, the sliding surface is formed in a flange that is integrally formed with the interlocking member.

According to the first aspect, the resistance means is configured such that the resistance force generated in the initial range in which the throttle grip is rotated by the predetermined angle from the initial position can be made different from the resistance force generated in the range in which the rotation angle is larger than the predetermined angle. Therefore, the resistance force can be set arbitrarily during initial rotation of the throttle grip, so that discomfort during the initial rotation can be eliminated, and operability can be improved.

Additionally, the resistance means is configured such that the resistance force generated in the initial range in which the throttle grip is rotated by the predetermined angle from the initial position can be made smaller than the resistance force generated in the range in which the rotation angle is larger than the predetermined angle. Therefore, the rotation load can be reduced by reducing arbitrarily the resistance force during the initial rotation of the throttle grip, so that discomfort during the initial rotation can be eliminated, and operability can be improved.

Additionally, the recess is formed in the part of the sliding surface corresponding to the initial range, and the compression dimension of the biasing means when the sliding member is located in the recess is set to be smaller than the compression dimension of the biasing means when the sliding member is located in other parts of the sliding surface. Therefore, the entire rotation resistance of the sliding member can be reduced by reducing the sliding resistance thereof generated during the initial rotation of the throttle grip, so that the discomfort during the initial rotation of the throttle grip can be eliminated, and operability can be improved.

Additionally, since the resistance means includes the pressing means that presses the interlocking member toward the direction in which the interlocking member is rotated from the initial position over the initial range, the resistance force during the initial rotation of the throttle grip can be reduced arbitrarily by the pressing means, so that discomfort during the initial rotation can be eliminated, and operability can be improved.

Additionally, since the pressing means includes the spring (coil spring) that can press a predetermined part of the interlocking member with a biasing force, the resistance force during the initial rotation of the throttle grip can be reduced smoothly and favorably by the biasing force of the spring.

According to the second aspect, since the sliding surface is formed in the flange that is integrally formed with the interlocking member, the sliding of the sliding member relative to the sliding surface can favorably follow with the rotation of the throttle grip and the interlocking member, so that the resistance force of the throttle grip during the initial rotation can be reliably reduced.

### BRIEF DESCRIPTION OF DRAWINGS

FIG. 1 is a side view illustrating a throttle grip and a switch case of a vehicle to which a throttle grip device according to a related example that is not claimed and does not include all features of the present invention;
FIG. 2 is a side view illustrating the throttle grip and an interlocking member in the throttle grip device;
FIG. 3 is a cross-sectional view taken along a line III-III in FIG. 2;
FIG. 4 is a perspective view illustrating the throttle grip device;
FIG. 5 is a 3-side view illustrating the throttle grip device;
FIG. 6 is a cross-sectional view taken along a line VI-VI in FIG. 5;
FIG. 7 is a perspective view illustrating a case of the throttle grip device;
FIG. 8 is a perspective view illustrating the interlocking member of the throttle grip device;
FIG. 9 is a 3-side view illustrating the interlocking member;
FIG. 10 is a side view illustrating a recess formed in the interlocking member;
FIG. 11 is a front view illustrating a state in which a torsion coil spring, a rotating member, and a sliding member which serves as resistance means are attached to the case of the throttle grip device;
FIG. 12 is a rear view illustrating a state in which the torsion coil spring, the rotating member, the sliding member which serves as resistance means, and the interlocking member are attached to the case of the throttle grip device;
FIG. 13 is a perspective view illustrating the resistance means (sliding member) of the throttle grip device;
FIG. 14 is a 3-side view illustrating the resistance means (sliding member);
FIGs. 15(a) and 15(b) are schematic views illustrating a state in which the sliding member of the resistance means in the throttle grip device is assembled with being pressed to a sliding surface (a state in which the throttle grip is in an initial position), in which FIG. 15(a) is a plan view and FIG. 15(b) is a side view;
FIGs. 16(a) and 16(b) are schematic views illustrating a state in which the sliding member of the resistance means in the throttle grip device is assembled with being pressed to the sliding surface (a state in which the throttle grip is rotated by a predetermined angle or more), in which FIG. 16(a) is a plan view and FIG. 16(b) is a side view;
FIG. 17 is a graph illustrating a relationship between an operation angle of the throttle grip and rotation load (torque) thereof in the throttle grip device;
FIG. 18 is a front view illustrating a state in which a torsion coil spring, a rotating member, and a sliding member and pressing means which serve as resistance means are attached to a case of a throttle grip device according to an embodiment of the present invention;
FIG. 19 is a rear view illustrating a state in which the torsion coil spring, the rotating member, the sliding member and the pressing means which serve as resistance means, and an interlocking member are attached to the case of the throttle grip device;
FIG. 20 is a perspective view illustrating resistance means (pressing means) of the throttle grip device;
FIG. 21 is a 3-side view illustrating the resistance means (pressing means);
FIGs. 22(a) and 22(b) are schematic views illustrating a state in which the sliding member of the resistance means in the throttle grip device is assembled with being pressed to a sliding surface, and the pressing means of the resistance means in the throttle grip device is assembled with being pressed to the interlocking member (a state in which the throttle grip is in an initial position), in which FIG. 22(a) is a plan view and FIG. 22(b) is a side view;
FIGs. 23(a) and 23(b) are schematic views illustrating a state in which the sliding member of the resistance means in the throttle grip device is assembled with being pressed to the sliding surface, and the pressing means of the resistance means is assembled (a state in which the throttle grip is rotated by a predetermined angle or more), in which FIG. 23(a) is a plan view and FIG. 23(b) is a side view; and
FIG. 24 is a graph illustrating a relationship between an operation angle of the throttle grip and rotation load (torque) thereof in the throttle grip device.

### DESCRIPTION OF AN EMBODIMENT

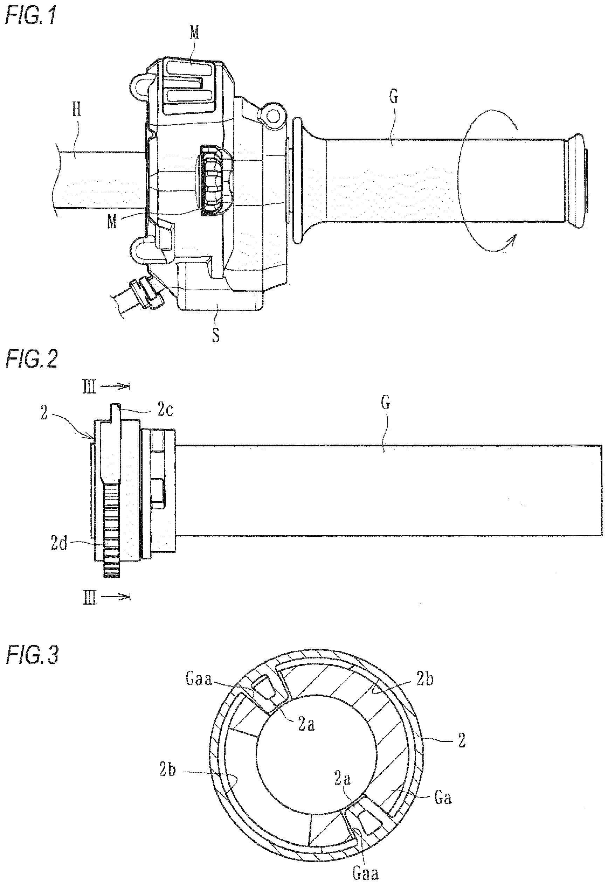

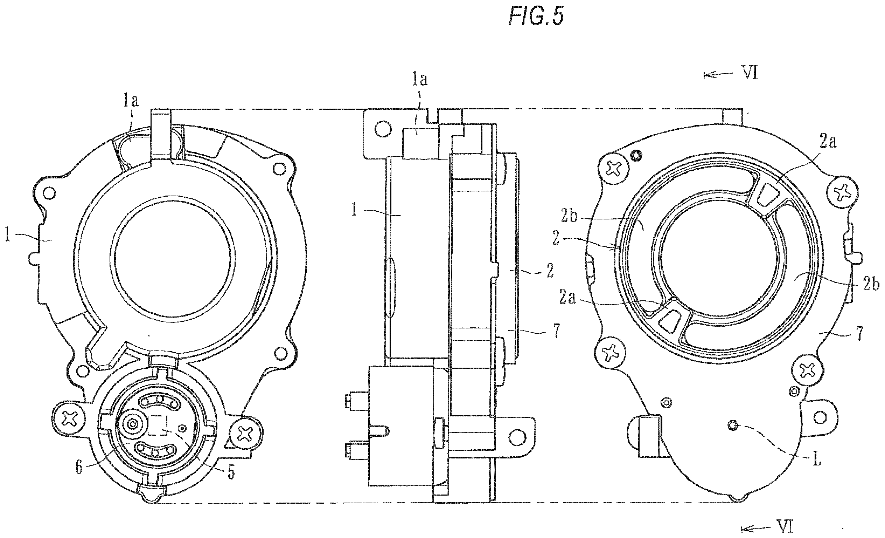

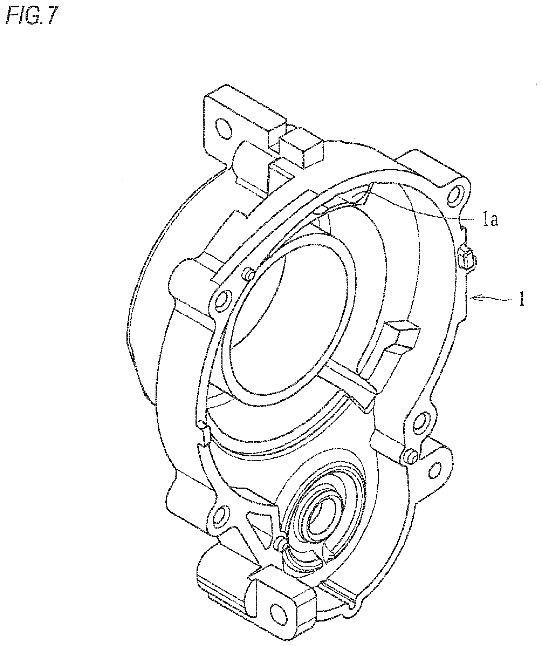

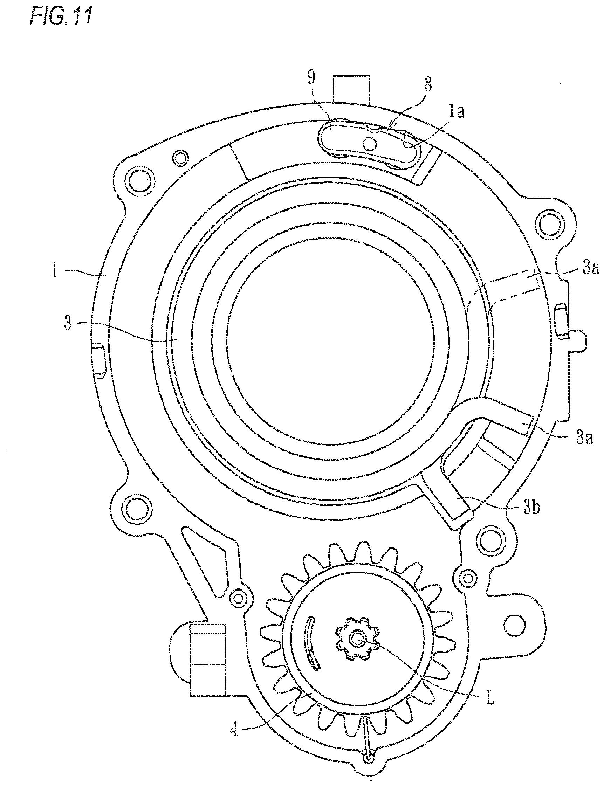

Hereinafter, a related example which is not claimed and does not include all features of the present invention is described in detail with reference to the drawings. Subsequently, an embodiment of the present invention is described in detail with reference to the drawings and the related example. As shown in FIG. 1, a throttle grip device according to the related example detects a rotation angle of a throttle grip G attached to a handlebar H of a motorcycle, and transmits the detected signal to an electronic control unit such as an ECU mounted on the motorcycle. The throttle grip device includes, as illustrated in FIGs. 2 to 14, the throttle grip G, a case 1, an interlocking member 2, a torsion coil spring 3, a rotating member 4, a magnetic sensor 5 (rotation angle detecting means), and resistance means 8.

The case 1 is arranged in a switch case S (see FIG. 1) attached to a leading end side (a base end side of the throttle grip G) of the handlebar H of the motorcycle (vehicle). The case 1 accommodates various components constituting the throttle grip device, and holds the interlocking member 2 and the rotating member 4 in a rotatable manner. A reference numeral M in FIG. 1 denotes a switch knob formed in the switch case S. A desired electrical component mounted on the motorcycle can be operated by operating a desired switch knob M. A reference numeral 7 denotes a lid member for closing an opening side of the case 1.

The throttle grip G extends from the switch case S and is capable of being rotated while being gripped by a driver. As illustrated by an arrow in FIG. 1, the throttle grip G is capable of being rotated about a shaft thereof in a predetermined direction from an initial position. As illustrated in FIG. 3, the throttle grip G is formed with an engaging portion Ga

(see FIG. 3) on a base end side thereof. The engaging portion Ga can be fitted into a fitting groove 2b of the interlocking member 2. When the engaging portion Ga is fitted into the fitting groove 2b, a groove shape Gaa of the engaging portion Ga engages with a convex engaged portion 2a formed on the interlocking member 2, so that the throttle grip G and the interlocking member 2 are coupled to each other.

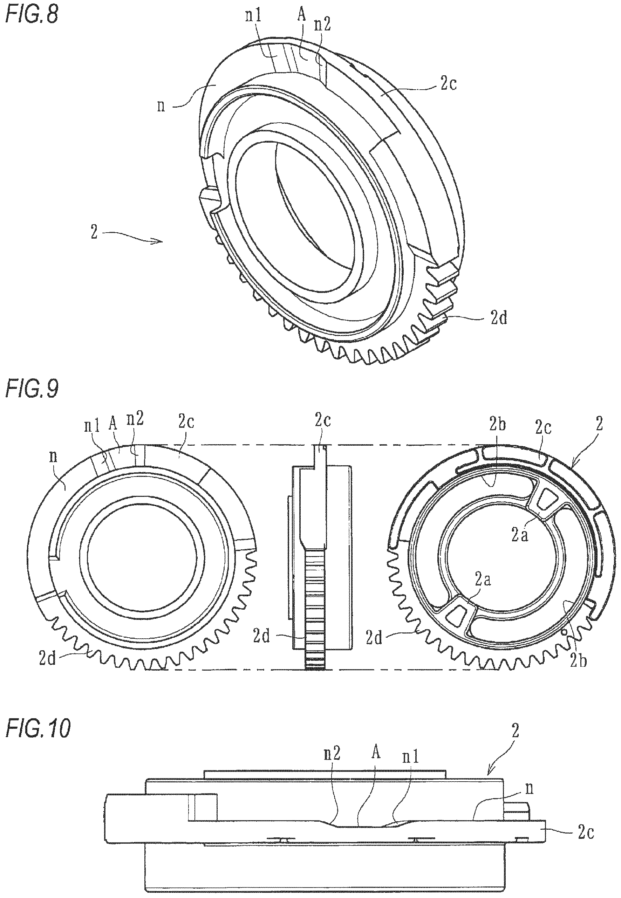

The interlocking member 2 includes the engaged portion 2a that can be engaged with the engaging portion Ga formed on the throttle grip G, and can be rotated in conjunction with the rotating operation of the throttle grip G. Specifically, as illustrated in FIGs. 8 to 10, the interlocking member 2 according to the related example is configured by an annular member that includes a pair of the engaged portions 2a, the fitting grooves 2b, a flange 2c, and a gear 2d. Particularly, the flange 2c according to the related example is formed with a sliding surface n to be described in detail below.

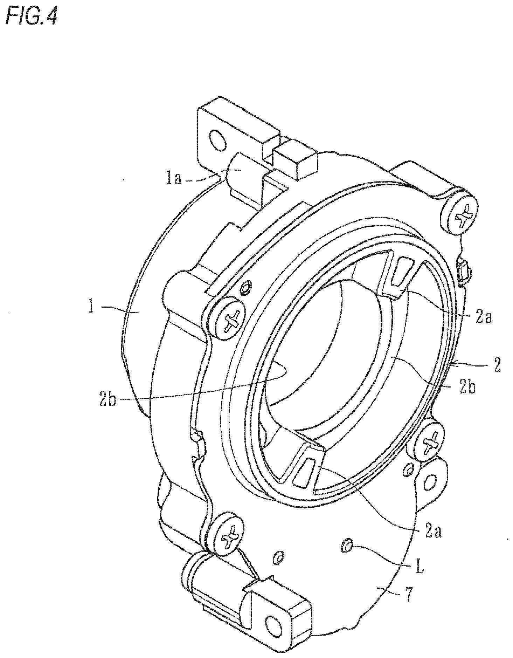

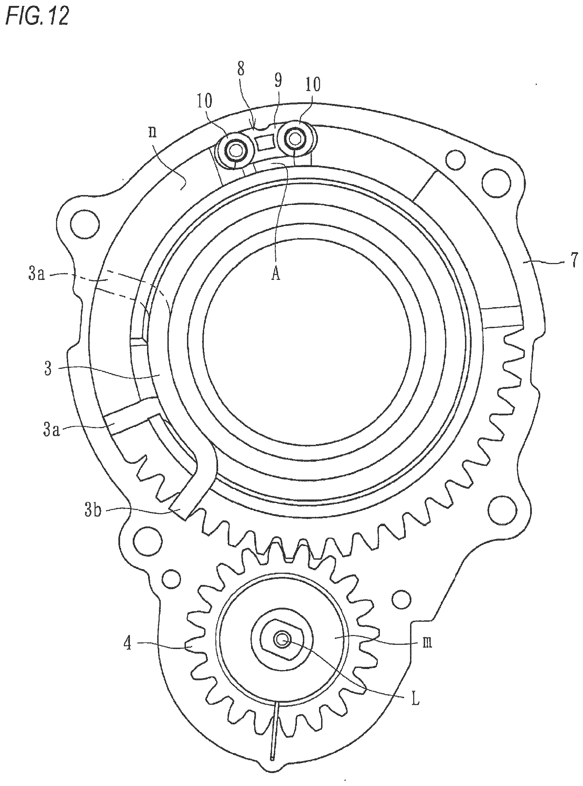

The engaged portions 2a are formed on a surface of the interlocking member 2 (one surface that can face outside when assembled to the case 1, as illustrated in FIG. 4), and are configured such that the engaging portion Ga of the throttle grip G can be easily fitted. The flange 2c is formed on the interlocking member 2 in a circumferential direction. The gear 2d is formed on a part of the flange 2c over a predetermined range. As illustrated in FIG. 12, the gear 2d is assembled in a state of being engaged with a gear formed on an outer periphery of the rotating member 4, so that the rotating member 4 is rotated with the rotation of the interlocking member 2.

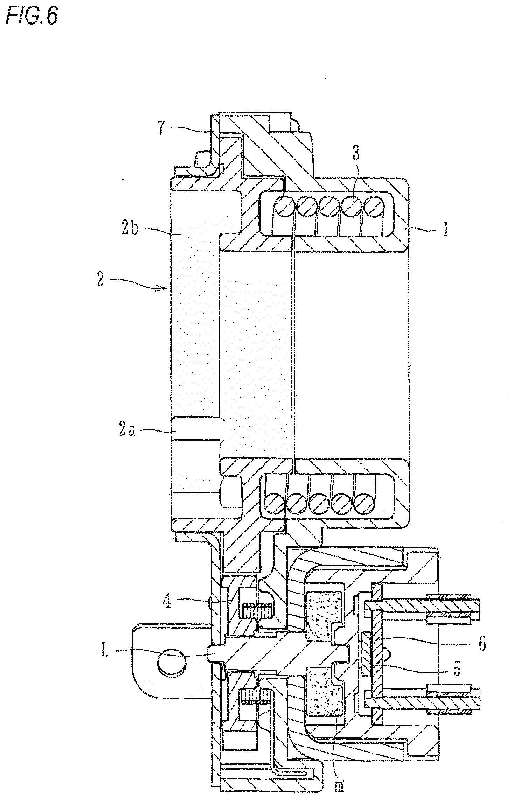

The rotating member 4 can be rotated in conjunction with the interlocking member 2 as described above, and is rotatable about a shaft L (see FIGs.6 and 12) while being accommodated in a predetermined position of the case 1. Therefore, when the interlocking member 2 is rotated, the rotating member 4 is rotated at a rotation angle corresponding to a rotation angle of the interlocking member 2. Further, a magnet m is attached to the rotating member 4, and a direction of a magnetic force generated from the magnet m is changed with the rotation of the rotating member 4.

As illustrated in FIG. 6, a magnetic sensor 5 (rotation angle detecting means) includes a sensor that is arranged at a position on an extension line of the shaft L of the rotating member 4. The magnetic sensor 5 is capable of detecting a rotation angle of the throttle grip G by detecting a change in magnetism generated from the magnet m attached to the rotating member 4. Specifically, the magnetic sensor 5 can obtain an output voltage corresponding to a change in a magnetic field (a change in magnetic flux density) of the magnet m. For example, the magnetic sensor 5 is configured by a Hall element (specifically, a linear Hall IC that can obtain an output voltage proportional to a magnetic field (magnetic flux density) of the magnet m) that is a magnetic sensor utilizing the Hall effect. The magnetic sensor 5 according to the related example is formed on a printed circuit board 6 on which a predetermined electric circuit is printed.

Therefore, when the interlocking member 2 is rotated in the same direction as the throttle grip G is rotated, the rotating member 4 is also rotated by an angle corresponding to a gear ratio, and the magnet m attached to the rotating member 4 is also rotated by the same angle in the same direction. Since the magnetic field is changed in accordance with the rotation angle, an output voltage corresponding to the rotation angle can be obtained, so that the rotation angle of the interlocking member 2 (that is, the rotation angle of the throttle grip G) can be detected based on the output voltage. The rotation angle of the throttle grip G which is detected in this manner is transmitted, as an electric signal, to an ECU mounted on the motorcycle, so that an engine of the motorcycle can be controlled in accordance with the transmitted rotation angle of the throttle grip G.

The torsion coil spring 3 is configured by a return spring whose one end 3a is locked to a predetermined part of the interlocking member 2 and the other end 3b is locked to a predetermined part of the case 1. The torsion coil spring 3 can, when the throttle grip G is rotated, bias the interlocking member 2, which is rotated in the same direction, toward the initial position. That is, when the throttle grip G is rotated, the interlocking member 2 is rotated against a biasing force of the torsion coil spring 3, so that the biasing force is transmitted to the throttle grip G, and a force returning the throttle grip G to the initial position acts.

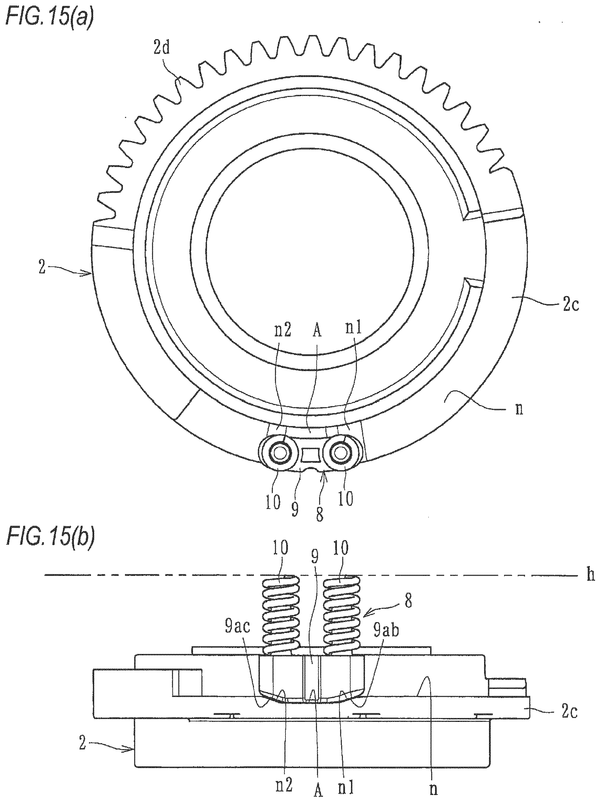

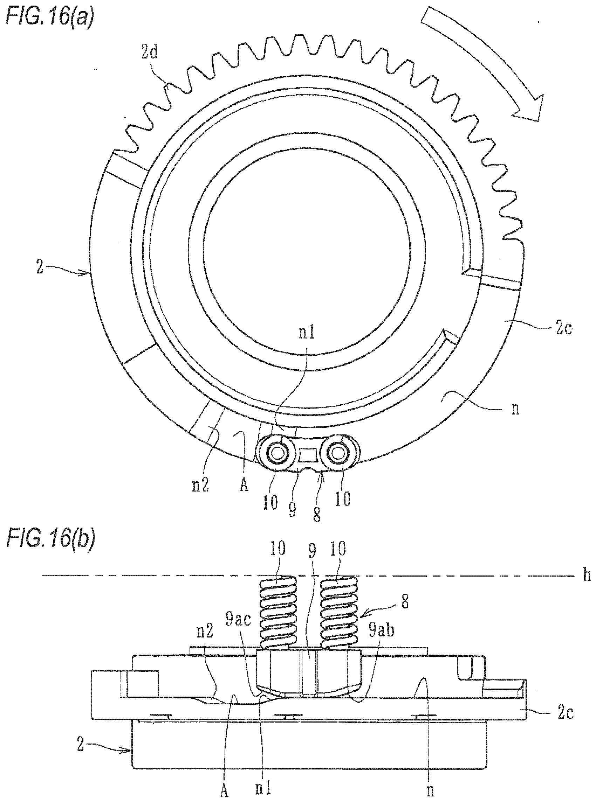

The resistance means 8 can generate rotation load by generating a resistance force during the rotation of the throttle grip G. In the related example, as illustrated in FIGs. 15 and 16, the resistance means 8 includes a sliding member 9 that is assembled to abut against the sliding surface n formed in the circumferential direction of the interlocking member 2, and biasing means 10 that presses the sliding member 9 against the sliding surface n by applying a biasing force thereto and that can generate sliding resistance as the interlocking member 2 is rotated. The sliding surface n according to the related example is formed in the flange 2c that is integrally formed with the interlocking member 2, and has a dimension in which the sliding member 9 is slidable. As illustrated in FIGs. 15 and 16, the biasing means 10 according to the related example includes a pair of coil springs that can press the sliding member 9 against the sliding surface n by the biasing force.

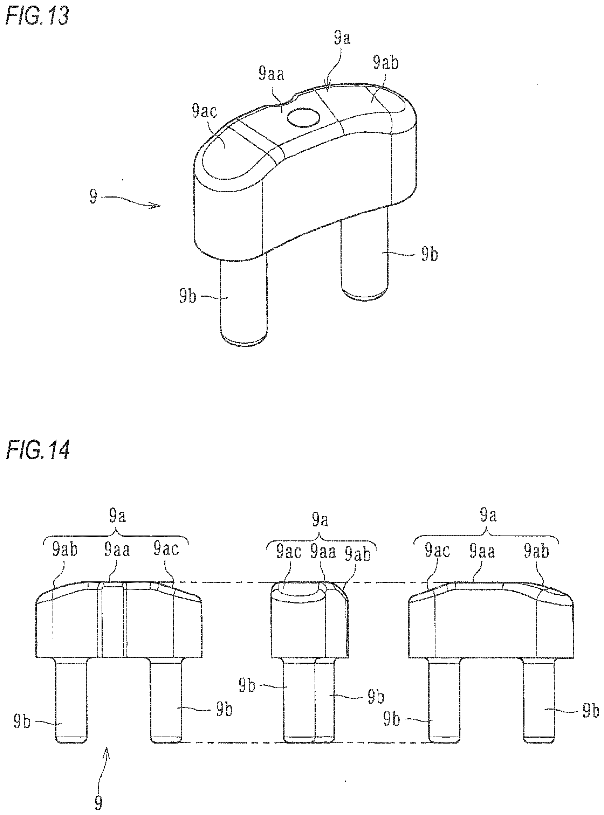

As illustrated in FIGs. 13 and 14, the sliding member 9 includes a surface 9a (the surface 9a including a central surface 9aa, an inclined surface 9ab, and an inclined surface 9ac) that is abutted against and is slidable on the sliding surface n, and a pair of protruding portions 9b that can be assembled by being inserted into the biasing means 10 (coil springs). Further, the case 1 includes an accommodating recess (not illustrated) at a predetermined position thereof, and the biasing means 10 is accommodated in the accommodating recess. After the sliding member 9 is assembled to the biasing means 10 by inserting the protruding portions 9b into the biasing means 10, the biasing means 10 can be compressed to apply a biasing force to the sliding member 9 when the surface 9a of the sliding member 9 is abutted against the sliding surface n.

Since the sliding member 9 is pressed against the sliding surface n by the biasing force of the biasing means 10, sliding resistance corresponding to the biasing force is generated when the interlocking member 2 is rotated and the surface 9a slides along the sliding surface n. Accordingly, when the throttle grip G is rotated and the interlocking member 2 rotates, sliding resistance is generated by the sliding member 9, and rotation load and the like of a throttle grip device including a conventional throttle wire is generated.

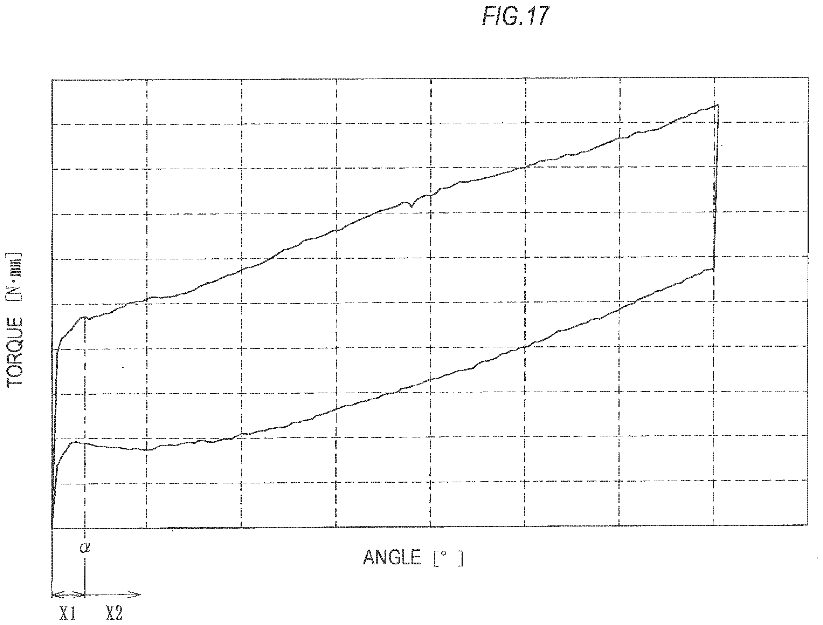

As illustrated in FIG. 17, the resistance means 8 according to the related example is configured such that a resistance force generated in an initial range (X1) in which the throttle grip G is rotated by a predetermined angle (α°) from the initial position (0°) can be smaller than a resistance force generated in a range (X2) in which the rotation angle of the throttle grip G is larger than the predetermined angle (α°). That is, when the biasing force by the torsion coil spring 3 is applied in accordance with the rotation of the throttle grip G, the resistance force by the resistance means 8 is applied. Therefore, as illustrated in FIG. 17, an increase tendency of the rotation load in the initial range (X1) can be made different from an increase tendency of the rotation load in the range (X2). In the graph illustrated in FIG. 17, the horizontal axis represents the rotation angle of the throttle grip G, and the vertical axis represents the rotation load (the entire rotation load (torque) including the biasing force of the torsion coil spring 3) corresponding to the rotation angle of the throttle grip G.

Specifically, as illustrated in FIG. 10, a recess A is formed in a part of the sliding surface n corresponding to the initial range (X1), and a compression dimension of the biasing means 10 when the sliding member 9 is located in the recess A is set to be smaller than the compression dimension of the biasing means 10 when the sliding member 9 is located in other parts of the sliding surface n.

That is, as illustrated in FIGs. 10, 15, and 16, the sliding surface n according to the related example includes inclined surfaces (n1, n2) by which the compression dimension of the biasing means 10 is changed, and the sliding member 9 is slidable on the inclined surfaces (n1, n2). Further, the biasing means 10 is accommodated in the accommodating recess of the case 1, and an attachment position h of the biasing means 10 is constant. Therefore, the sliding member 9 is slid on an inclined surface n1 or an inclined surface n2, so that the compression dimension of the biasing means 10 can be changed, and the biasing force of the biasing means 10 can be changed before and after the sliding member 9 is slid on the inclined surfaces (n1, n2) (before and after a boundary portion between the initial range XI and the range X2). Accordingly, the resistance force generated by the resistance means 8 in the initial range (X1) can be set smaller than the resistance force generated by the resistance means 8 in the range (X2).

Further, as illustrated in FIGs. 13 and 14, the surface 9a of the sliding member 9 according to the related example includes the substantially central surface 9aa and the inclined surfaces (9ab, 9ac) that are formed respectively at positions where the surface 9aa is interposed. The inclined surfaces (9ab, 9ac) correspond to the inclined surfaces (n1, n2). When the sliding member 9 is slid on the inclined surfaces (n1, n2), the inclined surfaces (n1, n2) and the inclined surfaces (9ab, 9ac) match with each other and are slidable. Accordingly, when the throttle grip G is rotated, the sliding member 9 can be slid smoothly on the inclined surfaces (9ab, 9ac), so that arbitrary rotation load can be favorably generated.

For example, when the throttle grip G is rotated, the interlocking member 2 in the initial position is rotated in the same direction, so that the sliding member 9 is slid on the inclined surface n1 and comes out of the recess A of the sliding surface n. Since the sliding member 9 is slid in an upward direction on the inclined surface n1, the biasing means 10 is compressed, and the compression dimension is increased. Therefore, the biasing force applied to the sliding member 9 (pressing force against the sliding surface n) when the sliding member 9 is located in other parts of the sliding surface n is larger than the biasing force applied to the sliding member 9 when the sliding member 9 is located in the recessed A. Accordingly, in the process of the rotating operation of the throttle grip G, the resistance force generated by the resistance means 8 in the initial range (X1) can be made smaller than the resistance force generated by the resistance means 8 in a subsequent range (X2).

According to the related example , the resistance means 8 is configured such that the resistance force generated in the initial range (X1) in which the throttle grip G is rotated by the predetermined angle (α°) from the initial position can be made smaller than the resistance force generated in the range (X2) in which the rotation angle is larger than the predetermined angle (α°). Therefore, the rotation resistance can be reduced by reducing arbitrarily the rotation load during initial rotation of the throttle grip G, so that discomfort during the initial rotation can be eliminated, and operability can be improved.

According to the related example , the recess A is formed in the part of the sliding surface n corresponding to the initial range (X1), and the compression dimension of the biasing means 10 when the sliding member 9 is located in the recess A is set to be smaller than the compression dimension of the biasing means 10 when the sliding member 9 is located in other parts of the sliding surface n. Therefore, the entire rotation resistance of the sliding member 9 can be reduced by reducing the sliding resistance thereof generated during the initial rotation of the throttle grip G, so that discomfort during the initial rotation of the throttle grip G can be eliminated, and operability can be improved.

Further, since the sliding surface n according to the related example is formed in the flange 2c that is integrally formed with the interlocking member 2, the sliding of the sliding member 9 relative to the sliding surface n can favorably follow with the rotation of the throttle grip G and the interlocking member 2, so that the resistance force of the throttle grip G during the initial rotation can be reliably reduced.

However, inclination angles and the like of the inclined surfaces (n1, n2) can be set arbitrarily according to a preference or the like of a user. The inclination angles of the inclined surfaces (n1, n2) may also be different. Therefore, during the initial rotation of the throttle grip G, since the sliding member 9 comes out of the recess A, it is possible to provide moderation to the throttle grip G when the throttle grip G starts being rotated.

Next, an embodiment of the present invention is described. As shown in FIG. 1, a throttle grip device according to the present embodiment detects a rotation angle of a throttle grip G attached to a handlebar H of a motorcycle, and transmits the detected signal to an electronic control unit such as an ECU mounted on the motorcycle. Similar to the related example , the throttle grip device includes the throttle grip G, the case 1, the interlocking member 2, the torsion coil spring 3, the rotating member 4, the magnetic sensor 5 (rotation angle detecting means), the resistance means 8, and another resistance means 11. Components that are the same as those in the related example are denoted by the same reference numerals, and detailed descriptions of these components are omitted.

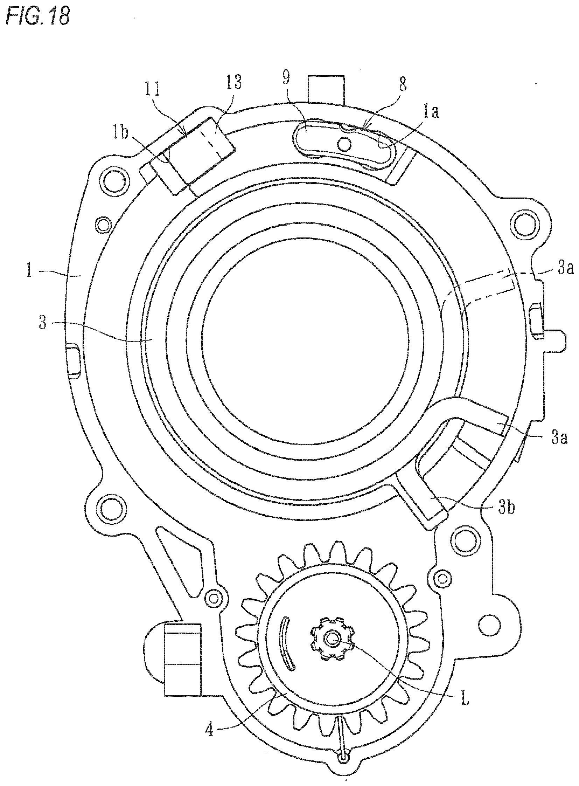

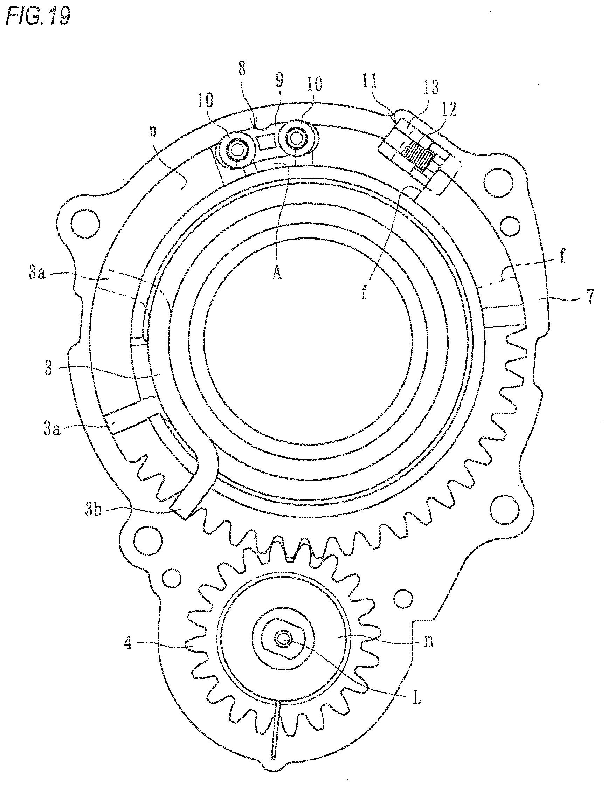

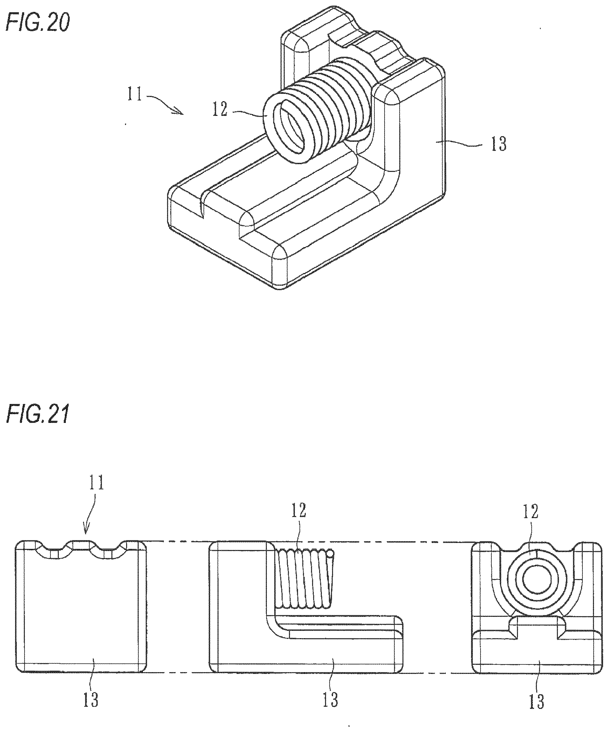

The resistance means 11 can generate rotation load by generating a resistance force during rotation of the throttle grip G. In the present embodiment, as illustrated in FIGs. 18 and 19, the resistance means 11 includes pressing means 12 that presses the interlocking member 2 toward a direction in which the interlocking member 2 is rotated from an initial position over an initial range (X1). As illustrated in FIGs. 20 and 21, the pressing means 12 according to the present embodiment includes a coil spring, and a base end of the pressing means 12 is fixed to a case 13.

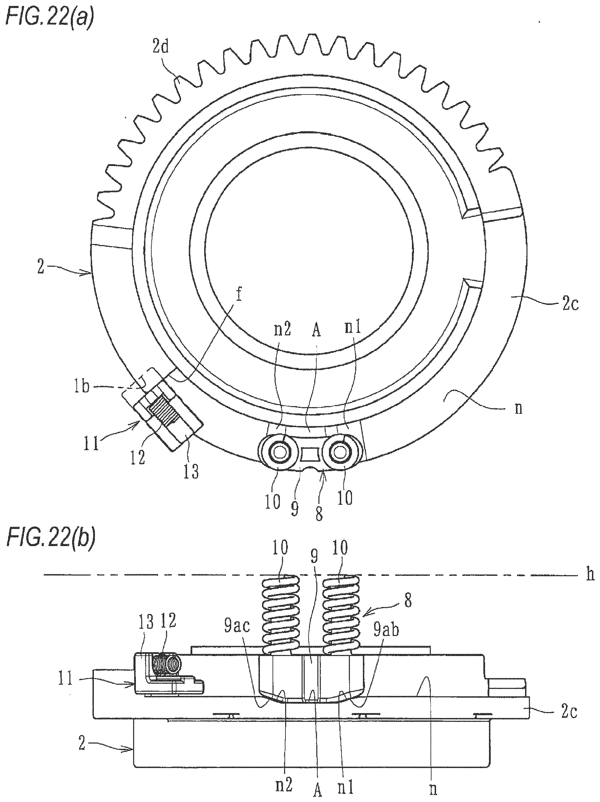

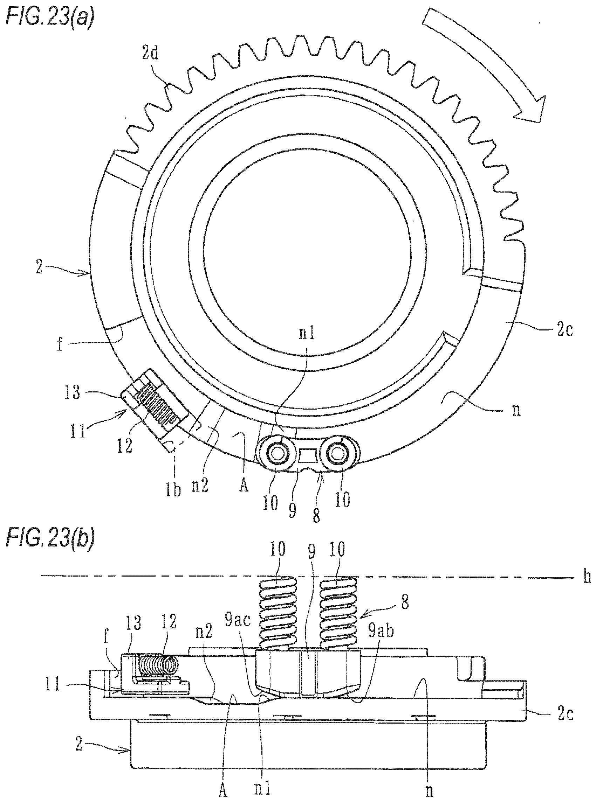

That is, as illustrated in FIGs. 18 and 19, when the case 13 is assembled to be fixed to an accommodating recess 1b of the case 1, a tip end of the pressing means 12 in a compressed state is abutted against a pressing surface f of the interlocking member 2, so that the interlocking member 2 can be pressed to be rotated toward the direction from the initial position by a biasing force of the pressing means 12. The pressing against the interlocking member 2 by the pressing means 12 is set (for example, an initial compression amount of a spring is set) only over the initial range (X1) in which the throttle grip G is rotated by a predetermined angle (α°) from an initial position (0°). When the throttle grip G is in the initial range (X1), as illustrated in FIG. 22, the pressing force of the pressing means 12 resists the biasing force of the torsion coil spring 3. When the throttle grip G is in a range (X2), as illustrated in FIG. 23, the pressing force of the pressing means 12 does not reach the interlocking member 2 (when the spring is fully extended).

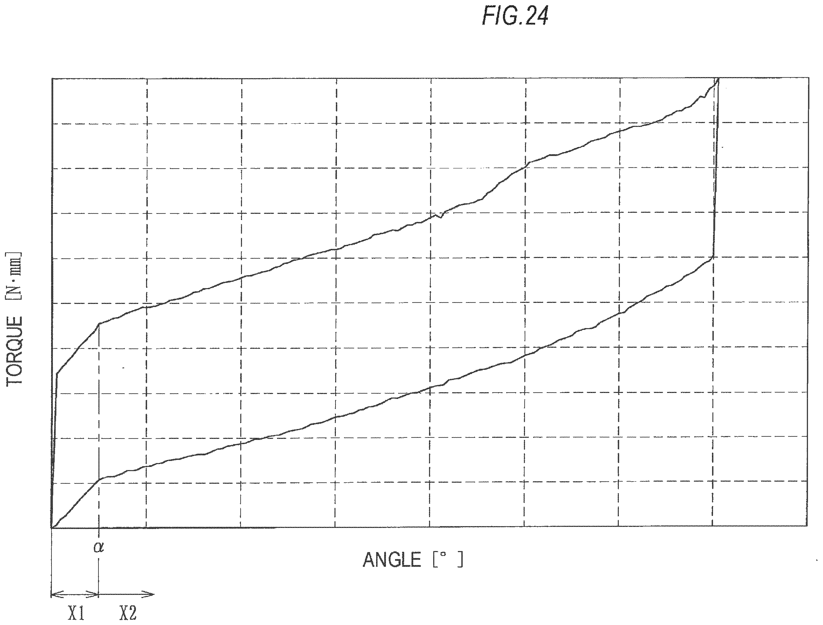

Therefore, as illustrated in FIG. 24, the resistance means 11 according to the present embodiment is configured such that a resistance force generated in the initial range (X1) in which the throttle grip G is rotated by the predetermined angle (α°) from the initial position (0°) can be smaller than a resistance force generated in the range (X2) in which a rotation angle is larger than the predetermined angle (α°). That is, when the biasing force by the torsion coil spring 3 is applied in accordance with the rotation of the throttle grip G, the resistance force by the resistance means 8 and the resistance means 11 is applied. Therefore, as illustrated in FIG. 24, an increase tendency of rotation load in the initial range (X1) can be made different from an increase tendency of the rotation load in the range (X2). In the graph illustrated in FIG. 24, the horizontal axis represents the rotation angle of the throttle grip G, and the vertical axis represents the rotation load (the entire rotation load (torque) including the biasing force of the torsion coil spring 3) corresponding to the rotation angle of the throttle grip G.

Therefore, in the initial range (X1) in which the throttle grip G is rotated by the predetermined angle (α°) from the initial position (0°), the sliding resistance by the resistance means 8 is set to be small (see the related example), and it is possible to resist the biasing force of the torsion coil spring 3 by the pressing force of the resistance means 12. Therefore, the rotation load during the initial rotation of the throttle grip G can be reduced.

According to the present embodiment, the resistance means 11 is configured such that the resistance force generated in the initial range (X1) in which the throttle grip G is rotated by the predetermined angle (α°) from the initial position can be made smaller than the resistance force generated in the range (X2) in which the rotation angle is larger than the predetermined angle (α°). Therefore, the rotation resistance can be reduced by reducing arbitrarily the rotation load during initial rotation of the throttle grip G, so that discomfort during the initial rotation can be eliminated, and operability can be improved.

Further, since the resistance means 11 according to the present embodiment includes the pressing means 12 that presses the interlocking member 2 toward the direction in which the interlocking member 2 is rotated from the initial position over the initial range (X1), the resistance force during the initial rotation of the throttle grip G can be reduced arbitrarily by the pressing means 12, so that discomfort during the initial rotation can be eliminated, and the operability can be improved. Particularly, since the pressing means 12 according to the present embodiment includes the spring (coil spring) that can press a predetermined part of the interlocking member 2 with a biasing force, the resistance force during the initial rotation of the throttle grip G can be reduced smoothly and favorably by the biasing force of the coil spring.

Although the related example and the embodiment have been described above, the present invention is defined by the claims. The biasing means 10 in may also be other generalpurpose elastic bodies (other forms of springs such as torsion springs and leaf springs, resins or rubbers).

In the embodiment, the resistance force generated in the initial range in which the throttle grip G is rotated by the predetermined angle from the initial position is smaller than the resistance force generated in the range in which the rotation angle is larger than the predetermined angle. In the related example which is not claimed, the resistance force generated in the initial range in which the throttle grip G is rotated by the predetermined angle from the initial position may be larger than the resistance force generated in the range in which the rotation angle is larger than the predetermined angle.

Further, instead of the magnetic sensor 5, other sensors (such as a sensor not using magnetism) that can detect the rotation angle of the throttle grip G may also be used. The vehicle to be applied is not limited to a motorcycle as in the embodiments, and may be applied to other vehicles (for example, an ATV or a snowmobile) including a handlebar H thereon.

A throttle grip device including resistance means, which is configured such that a resistance force generated in an initial range in which a throttle grip is rotated by a predetermined angle from an initial position is smaller than a resistance force generated in a range in which the rotation angle of the throttle grip is larger than the predetermined angle, can also be applied to a throttle grip device having a different appearance shape or a combination of other functions.

## Claims

1. A throttle grip device comprising:
a throttle grip (G) that is rotatable by a driver;
an interlocking member (2) that can be rotated in conjunction with the throttle grip (G);
rotation angle detecting means (5) that can detect a rotation angle of the throttle grip (G) by detecting a rotation angle of the interlocking member (2); and
resistance means (8,11) that can generate rotation load by generating a resistance force during rotation of the throttle grip (G), wherein
the throttle grip device can control an engine of a vehicle in accordance with the rotation angle of the throttle grip (G) detected by the rotation angle detecting means (5),
the resistance means (8,11) is configured such that a resistance force generated in an initial range (X1) in which the throttle grip (G) is rotated by a predetermined angle (α°) from an initial position (0°) can be smaller than a resistance force generated in a range (X2) in which the rotation angle of the throttle grip (G) is larger than the predetermined angle (α°), and
the resistance means (8,11) includes:
a sliding member (9) that is assembled to be abutted against a sliding surface (n) that is formed in a circumferential direction of the interlocking member (2); and
biasing means (10) that can press the sliding member (9) against the sliding surface (n) by applying a biasing force to the sliding member (9), and generate sliding resistance with rotation of the interlocking member (2),
**characterized in that**
a recess (A) is formed in a part of the sliding surface (n) corresponding to the initial range (X1), and a compression dimension of the biasing means (10) when the sliding member (9) is located in the recess (A) is set to be smaller than the compression dimension of the biasing means (10) when the sliding member (9) is located in other parts of the sliding surface (n),
the resistance means (8,11) includes pressing means (12) that presses the interlocking member (2) toward a direction in which the interlocking member (2) is rotated from the initial position (0°) over the initial range (X1), and
the pressing means (12) includes a spring that can press a predetermined part (f) of the interlocking member (2) by a biasing force.

2. The throttle grip device according to claim 1, **characterized in that**
the sliding surface (n) is formed in a flange (2c) that is integrally formed with the interlocking member (2).

## Patentansprüche

1. Gasdrehgriff-Vorrichtung, umfassend:
einen Gasdrehgriff (G), der von einem Fahrer gedreht werden kann;
ein Eingriffselement (2), das in Verbindung mit dem Gasdrehgriff (G) gedreht werden kann;
eine Drehwinkel-Erfassungseinrichtung (5), die einen Drehwinkel des Gasdrehgriffs (G) erfassen kann, indem sie einen Drehwinkel des Eingriffselementes (2) erfasst; und
eine Widerstandseinrichtung (8, 11), die Rotations-Last erzeugen kann, indem sie bei Drehung des Gasdrehgriffs (G) eine Widerstandskraft erzeugt, wobei
die Gasdrehgriff-Vorrichtung einen Motor eines Fahrzeugs entsprechend dem durch die Drehwinkel-Erfassungseinrichtung (5) erfassten Drehwinkel des Gasdrehgriffs (G) steuern kann,
die Widerstandseinrichtung (8, 11) so ausgeführt ist, dass eine Widerstandskraft, die in einem Anfangsbereich (X1) erzeugt wird, in dem der Gasdrehgriff (G) um einen vorgegebenen Winkel (α°) von einer Anfangsposition (0°) ausgehend gedreht ist, kleiner sein kann als eine Widerstandskraft, die in einem Bereich (X2) erzeugt wird, in dem der Drehwinkel des Gasdrehgriffs (G) größer ist als der vorgegebene Winkel (α°), und
die Widerstandseinrichtung (8,11) einschließt:
ein Gleitelement (9), das so montiert ist, dass es an einer Gleitfläche (n) anliegt, die in einer Umfangsrichtung des Eingriffselementes (2) ausgebildet ist; und
eine Vorspanneinrichtung (10), die das Gleitelement (9) an die Gleitfläche (n) drücken kann, indem sie eine Vorspannkraft auf das Gleitelement (9) ausübt, und einen Gleitwiderstand bei Drehung des Verriegelungselementes (2) erzeugt,
**dadurch gekennzeichnet, dass**
eine Aussparung (A) in einem Teil der Gleitfläche (n) ausgebildet ist, der dem Anfangsbereich (X1) entspricht, und ein Kompressionsmaß der Vorspanneinrichtung (10), wenn sich das Gleitelement (9) in der Aussparung (A) befindet, so eingestellt ist, dass es kleiner ist als das Kompressionsmaß der Vorspanneinrichtung (10), wenn sich das Gleitelement (9) in anderen Teilen der Gleitfläche (n) befindet,
die Widerstandseinrichtung (8, 11) eine Drückeinrichtung (12) umfasst, die das Eingriffselement (2) in eine Richtung drückt, in der das Eingriffselement (2) von der Ausgangsposition (0°) ausgehend über den Ausgangsbereich (X1) gedreht wird, und
die Drückeinrichtung (12) eine Feder enthält, die einen vorgegebenen Teil (f) des Eingriffselementes (2) mittels einer Vorspannkraft drücken kann.

2. Gasdrehgriff-Vorrichtung nach Anspruch 1, **dadurch gekennzeichnet, dass**
die Gleitfläche (n) in einem Flansch (2c) ausgebildet ist, der integral mit dem Eingriffselement (2) ausgebildet ist.

## Revendications

1. Dispositif de poignée d'accélérateur comprenant :
une poignée d'accélérateur (G) qui peut être tournée par un conducteur ;
un élément d'interverrouillage (2) qui peut être tourné conjointement avec la poignée d'accélérateur (G) ;
des moyens de détection d'angle de rotation (5) qui peuvent détecter un angle de rotation de la poignée d'accélérateur (G) en détectant un angle de rotation de l'élément d'interverrouillage (2) ; et
des moyens de résistance (8, 11) qui peuvent générer une charge de rotation en générant une force de résistance pendant une rotation de la poignée d'accélérateur (G), dans lequel
le dispositif de poignée d'accélérateur peut commander un moteur d'un véhicule en fonction de l'angle de rotation de la poignée d'accélérateur (G) détecté par les moyens de détection d'angle de rotation (5),
les moyens de résistance (8, 11) sont configurés de telle sorte qu'une force de résistance générée dans une plage initiale (X1) dans laquelle la poignée d'accélérateur (G) est tournée d'un angle prédéterminé (a°) à partir d'une position initiale (0°) peut être inférieure à une force de résistance générée dans une plage (X2) dans laquelle l'angle de rotation de la poignée d'accélérateur (G) est plus grand que l'angle prédéterminé (a°), et
les moyens de résistance (8, 11) comprennent :
un élément coulissant (9) qui est assemblé pour venir en butée contre une surface coulissante (n) qui est formée dans une direction circonférentielle de l'élément d'interverrouillage (2) ; et
des moyens de sollicitation (10) qui peuvent presser l'élément coulissant (9) contre la surface coulissante (n) en appliquant une force de sollicitation à l'élément coulissant (9), et générer une résistance au coulissement avec une rotation de l'élément d'interverrouillage (2),
**caractérisé en ce que**
un évidement (A) est formé dans une partie de la surface coulissante (n) correspondant à la plage initiale (X1), et une dimension de compression des moyens de sollicitation (10) lorsque l'élément coulissant (9) est situé dans l'évidement (A) est établie pour être plus petite que la dimension de compression des moyens de sollicitation (10) lorsque l'élément coulissant (9) est situé dans d'autres parties de la surface coulissante (n),
les moyens de résistance (8, 11) comprennent des moyens de pression (12) qui pressent l'élément d'interverrouillage (2) vers une direction dans laquelle l'élément d'interverrouillage (2) est tourné à partir de la position initiale (0°) sur la plage initiale (X1), et
les moyens de pression (12) comprennent un ressort qui peut presser une partie prédéterminée (f) de l'élément d'interverrouillage (2) par une force de sollicitation.

2. Dispositif de poignée d'accélérateur selon la revendication 1, **caractérisé en ce que** la surface coulissante (n) est formée dans une bride (2c) qui est formée d'un seul tenant avec l'élément d'interverrouillage (2).
